# EUROPEAN PATENT APPLICATION

(11) **EP 2 873 900 A1**
(43) Date of publication of application: **20.05.2015**
(21) Application number: 13425149.5
(22) Date of filing: 18.11.2013
(51) Int. Cl.: F16L 55/10, B67D 7/32, F16K 17/36, F16K 17/38

(54) **High security double closing member valve, in particular for fuel delivery systems**

(71) Applicant: Ridart S.r.l., 21013 Gallarate (VA) (IT)
(72) Inventor: Meneghini, Davide, 21040 Morazzone (VA) (IT)
(74) Representative: Zanardo, Giovanni

(57) **Abstract**

Double closing member valve (10) comprising:
- a valve body (13) having two sleeves (14, 15) in series and joined together by a breaking area (16);
- two closing members (17, 18) inside said valve body (13), upstream and downstream of said breaking area (16), said closing members being mobile between a rest position, in which they free the passage, and a work position, in which they obstruct the channel upstream and downstream of said breaking area (16);
- spring elements (22) pre-loaded to force said closing members (17, 18) to said work position;
- releasable constraining means (23) acting on said closing members (17, 18) to keep them in said rest position and comprising a bridge element of the breakable, withdrawable or non flame resistant type, arranged outside said valve body (13) astride of said pre-arranged breaking area (16) and with ends associated with said drive shafts (20, 21).

## Description

The present invention refers to a high security double closing member valve.

Specifically, the present invention preferably, but in no way limitingly, refers to a double closing member valve for fuel delivery systems.

Currently on the market there are security valves for fuel delivery systems of the type comprising:
- a valve body equipped with two sleeves, preferably made in single fusion, arranged in series to make a longitudinal channel for the fuel to pass through coming out from the underground tank and feeding the supply pumps, in which the two sleeves are joined together by a pre-arranged breaking area; and
- two closing members arranged inside the valve body respectively upstream and downstream of the pre-arranged breaking area, in which the closing members are mobile between a rest position, in which the channel is open, and a work position, in which the channel is obstructed both upstream and downstream of the pre-arranged breaking area.

The control of the passage between the two positions can be electronic or mechanical.

Mechanical systems currently known are provided with spring elements pre-loaded to force the closing members from the rest position to the work position and releasable constraining means acting on the closing members to keep them in rest position until needed.

Indeed, it is provided for the valve to close only in emergencies, like in the case of fires, explosions or other.

In such cases it is essential for the valve to be obstructed both on the tank side and on the pump side to avoid fuel coming out.

Currently, each closing member is controlled autonomously with the risk that, in an emergency, one of the sections of the valve upstream or downstream of the pre-arranged breaking area may remain open in an unwanted manner.

Moreover, in the case of double closing member valves, one of the two closing members, and consequently one of the two passages defining the channel, is smaller in size than the other. In this way it is easier to close the passage but the flow of fuel is negatively affected, reducing its flow rate.

Starting from such a prior art, the purpose of the present invention is to make a double closing member valve that is an alternative to known ones, particularly efficient and capable of ensuring, when required, the simultaneous closing of the closing members both upstream and downstream of the pre-arranged breaking area.

According to the most general aspect of the invention, these purposes are accomplished by providing the presence of a single constraining element shared by both actuators in the form of a bridge connection element arranged outside of the valve body.

In this way, since the constraining element is a single breakable, withdrawable or non flame resistant element, in all possible emergency scenarios it ensures that the mechanical block simultaneously fails on both closing members.

The characteristics and advantages of a double closing member valve according to the present invention will become clearer from the following description, given as a non-limiting example, referring the attached schematic drawings, in which:

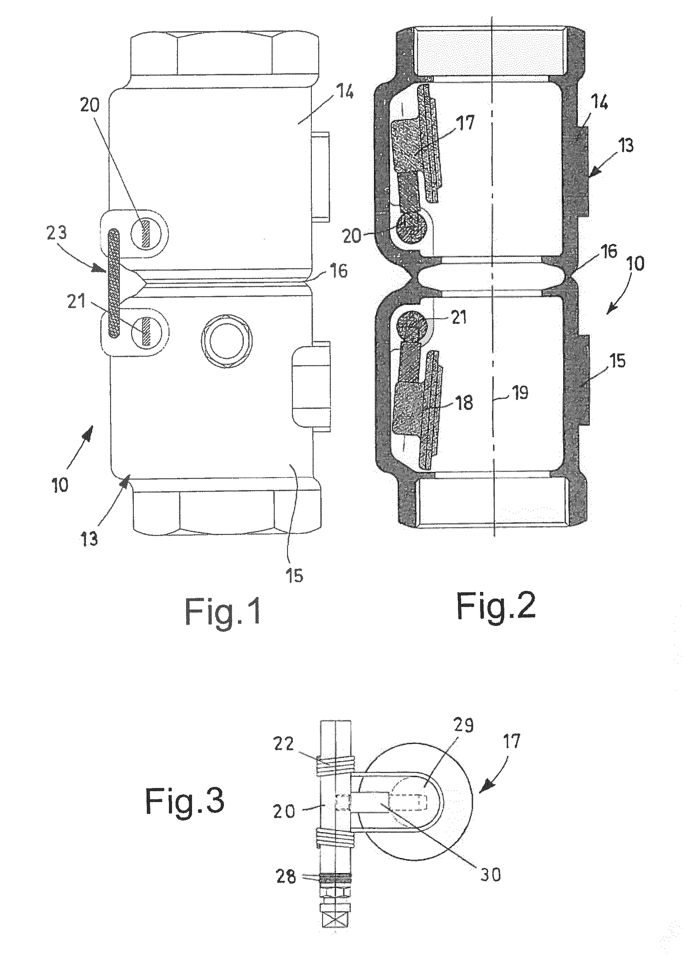

- figure 1 is an elevation view of a double closing member valve according to the present invention;
- figure 2 is a section view of the valve of figure 1;
- figure 3 is a schematic view of one of the two closing members of the valve of figure 1;

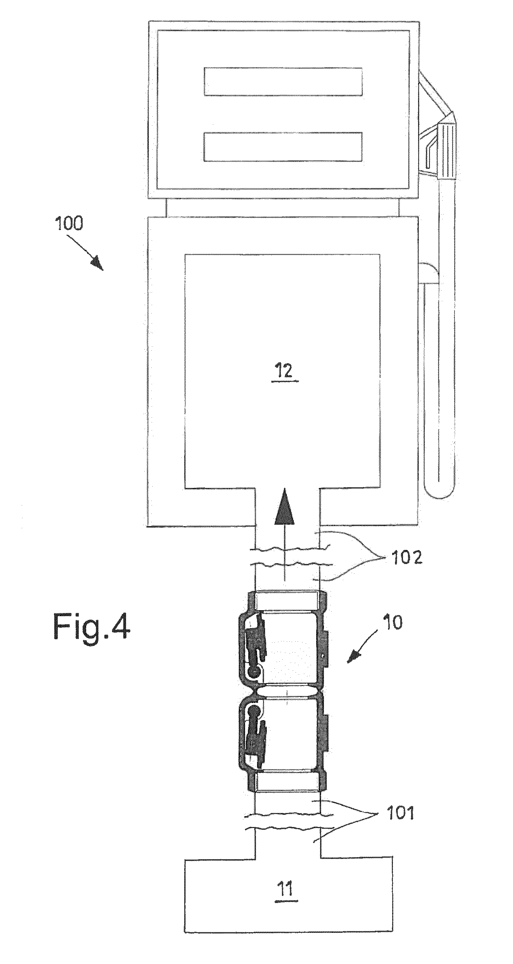

- figure 4 schematizes a fuel delivery system with the valve of figure 1;

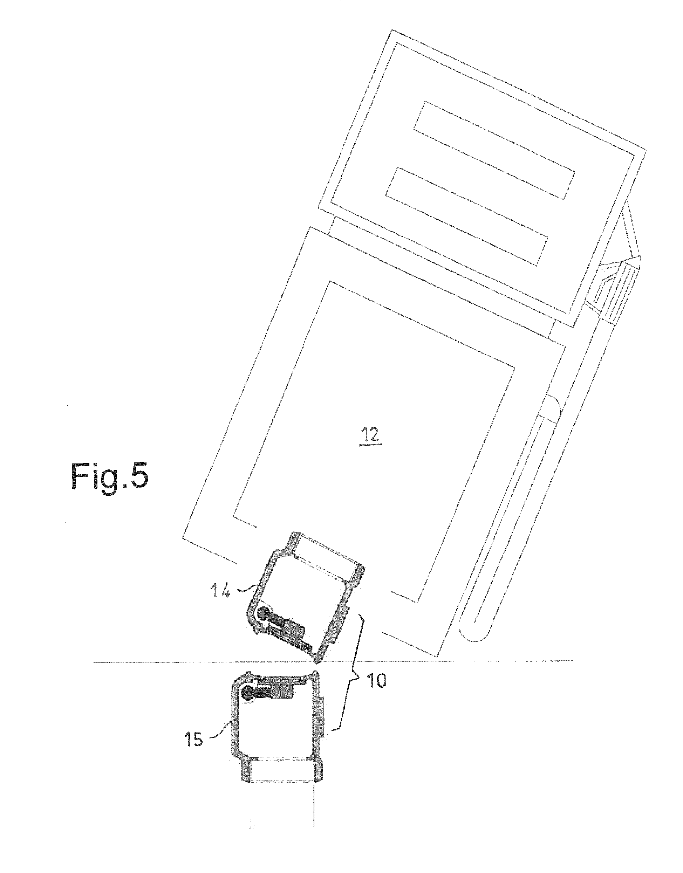

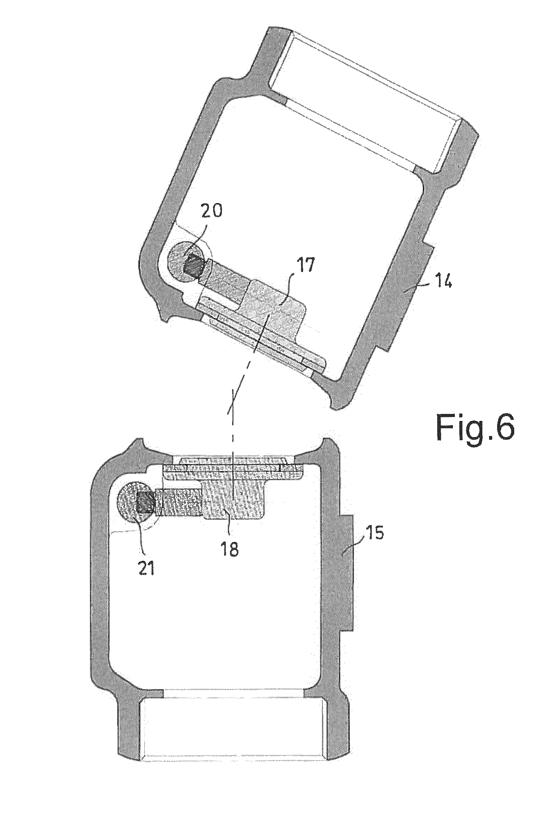

- figures 5 and 6 schematise the operation of the valve of figure 1 in emergency conditions;

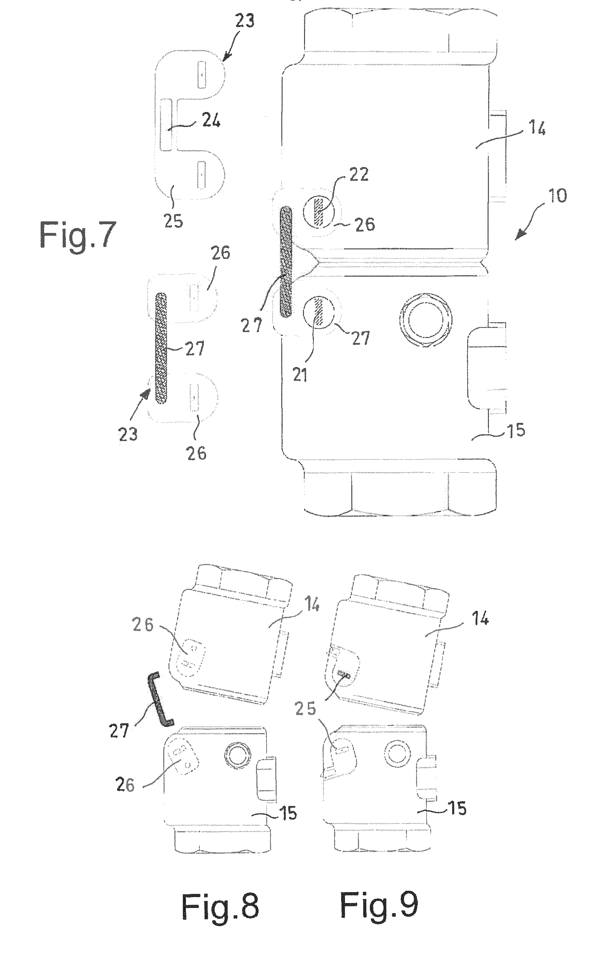

- figures 7-9 show two different valves according to the present invention in the various steps of use.

With reference to the figures, a double closing member valve according to the present invention is shown with 10.

Such a valve 10 is particularly suitable for the connection between an underground fuel tank 11 and fuel distributors 12.

However, the valve 10 can also be applied in other fields where there are the same requirements.

The valve 10 comprises a valve body 13 equipped with two sleeves 14, 15, preferably made in single fusion, arranged in series to make a longitudinal channel 19 for the fuel to pass through.

The two sleeves 14, 15 are joined together by a pre-arranged breaking area 16, for example a portion of reduced thickness.

Inside the valve body 10 two closing members 17, 18 are arranged, respectively upstream and downstream of the pre-arranged breaking area 16.

Such closing members 17, 18 are mounted on respective drive shafts 20, 21 perpendicular to the longitudinal channel 19 and are mobile between a rest position, in which they are parallel to the longitudinal channel 19 to free the passage of the fuel, and a work position, in which they are perpendicular to the longitudinal channel 19 to obstruct the passage of the fuel both upstream and downstream of the pre-arranged breaking area 16.

Since the actuation of the closing members 17, 18 is of the mechanical type, spring elements 22 are arranged so that are pre-loaded to force the closing members 17, 18 from the rest position to the work position and releasable constraining means 23 acting on the closing members 17, 18 to keep them in the rest position until needed.

In other words, they are kept there until there is an emergency condition as described earlier.

According to the invention the releasable constraining means 23 comprise a bridge element 23 arranged outside of the valve body 13 astride of the pre-arranged breaking area 16 and with ends associated with the drive shafts 20, 21.

In this way, it is ensured that:
- when the external bridge connection between the drive shafts 20, 21 is maintained, it is foreseen to mechanically block the spontaneous rotation of the closing members 17, 18 into the rest position overcoming the return force of the spring elements 22; and
- when the external bridge connection between the drive shafts 20, 21 is no longer in place, due to breaking or burning up of the bridge element 23 itself, the simultaneous mechanical closure of the channel 19 is freed both upstream and downstream of the pre-arranged breaking area 16 for the spontaneous rotation of the closing members 17, 18 from the rest position to the work position.

Since the constraint on both of the actuators only performed by the bridge connection element 23, once such a bridge connection is broken both the actuators are free simultaneously.

According to various embodiments the bridge element 23 can be of the breakable type, for example with a pre-arranged breaking portion 24.

As far as the material is concerned, the bridge connection element 23 can be metallic or at least partially made from non flame resistant material, for example plastic material 25.

Alternatively, the bridge element 23 can comprise ends made from plastic material 26 and a metallic intermediate portion 27.

In all of these different embodiments the operation is always the same, as can easily be worked out.

It is also foreseen for the bridge element 23 to be mounted on the drive shafts 20, 21 in an at least partially withdrawable manner, thus actually actuating the closing of the valve even before it breaks.

Finally, according to constructive aspects, 0-rings 28 are arranged fitted on the drive shafts 20, 21 at the passage between inside and outside of the valve body 13 and it is arranged for the closing members 17, 18 to comprise an enlarged head 29 connected to the drive shafts 20, 21 by means of a pin 30.

In this case, the spring elements are wound in a coil on the drive shafts 20, 21 and sent on to the enlarged head 29.

It has thus been seen that a double closing member valve according to the present invention achieves the purposes highlighted earlier.

The double closing member valve of the present invention thus conceived can undergo numerous modifications and variants, all of which are covered by the same inventive concept; moreover, all of the details can be replaced by technically equivalent elements. In practice, the materials used, as well as their sizes, can be of any type according to the technical requirements.

## Claims

1. Double closing member valve (10) for the connection between an underground fuel tank (11) and fuel distributors (12) of the type comprising:
- a valve body (13) equipped with two sleeves (14, 15) arranged in series to make a longitudinal channel (19) for the fuel to pass through and joined together by a pre-arranged breaking area (16);
- two closing members (17, 18) arranged inside said valve body (13) respectively upstream and downstream of said pre-arranged breaking area (16), wherein said closing members (17, 18) are mounted on respective drive shafts (20, 21) perpendicular to said longitudinal channel (19) and mobile between a rest position, in which they are parallel to said longitudinal channel (19) to free the passage of the fuel, and a work position, in which they are perpendicular to said longitudinal channel (19) to obstruct the passage of fuel both upstream and downstream of said pre-arranged breaking area (16);
- spring elements (22) preloaded to force said closing members (17, 18) from said rest position to said work position; and
- releasable constraining means (23) acting on said closing members (17, 18) to keep them in said rest position;
said valve (10) being **characterised in that** said releasable constraining means (23) comprise a bridge element (23) arranged outside said valve body (13) astride of said pre-arranged breaking area (16) and with ends associated with said drive shafts (20, 21) so that:
- when the external bridge connection between said drive shafts (20, 21) is maintained, the spontaneous rotation of said closing members (17, 18) is mechanically locked in said rest position overcoming the return of said spring elements (22);
- when the external bridge connection between said drive shafts (20, 21) is broken, there is simultaneous mechanical closing of said channel (19) both upstream and downstream of said pre-arranged breaking area (16) by the spontaneous rotation of said closing members (17, 18) from said rest position to said work position.

2. Valve (10) according to claim 1 **characterised in that** said bridge element (23) is of the breakable type.

3. Valve (10) according to claim 2 **characterised in that** said bridge element (23) comprises a pre-arranged breaking portion (24).

4. Valve (10) according to any one of the previous claims **characterised in that** said bridge element (23) is at least partially made from non flame resistant material.

5. Valve (10) according to claim 4 **characterised in that** said bridge element (23) is at least partially made from plastic material (25).

6. Valve (10) according to claim 5 **characterised in that** said bridge element (23) comprises ends made from plastic material (26) and a metallic intermediate portion (27).

7. Valve (10) according to any one of the previous claims **characterised in that** said bridge element (23) is mounted on said drive shafts (20, 21) in an at least partially withdrawable manner.

8. Valve (10) according to any one of the previous claims **characterised in that** it comprises 0-rings (28) fitted onto said drive shafts (20, 21) at the passage between inside and outside of said valve body (13).

9. Valve (10) according to any one of the previous claims **characterised in that** said closing members (17, 18) comprise an enlarged head (29) connected to said drive shafts (20, 21) by means of a pin (30); said spring elements being wound in a spiral on said drive shafts (20, 21) and sent on to said enlarged head (29).

10. Fuel delivery system (100) of the type comprising:
- an underground fuel tank (11);
- at least one fuel distributor (12); and
- a valve (10) arranged between said underground fuel tank (11) and said at least one fuel distributor (12) connected on one side to a pipe for pumping from the tank (101) and on another side to at least one pipe for feeding to said at least one fuel distributor (12); said system (100) being **characterised in that** said valve (10) is a double closing member valve (10) according to any one of the previous claims.
